# DEMANDE DE BREVET EUROPEEN

(11) **EP 2 113 824 A2**
(43) Date de publication de la demande: **04.11.2009**
(21) Numéro de dépôt: 09158573.7
(22) Date de dépôt: 23.04.2009
(51) Int. Cl.: G06F 3/01, H01H 13/85

(54) **Dispositif de commande à retour haptique**

(30) Priorité: 25.04.2008 FR 0802322
(71) Demandeur: DAV, 94000 Creteil (FR)
(72) Inventeur: Laurent, Patrice, 74106 Annemasse (FR); Bonhoure, Patrick, 74106 Annemasse (FR)
(74) Mandataire: Croonenbroek, Thomas Jakob

(57) **Abrégé**

L'invention concerne un dispositif de commande à retour haptique comportant une plaque de support (4) pour transmettre un retour haptique à un utilisateur et au moins un actionneur (2) relié à ladite plaque (4) pour générer le retour haptique, ledit actionneur (2) comportant une partie fixe (6) et un induit mobile (8) en translation dans un entrefer (E) de la partie fixe (6) entre une première et une deuxième position, **caractérisé en ce que** ladite plaque (4) et ledit induit (8) sont formés d'une seule pièce.

## Description

La présente invention concerne un dispositif de commande à retour haptique comportant une plaque de support apte à transmettre un retour haptique, tel qu'une vibration, à un utilisateur par exemple après la modification ou la sélection d'une commande.

On connaît déjà des dispositifs de commande à retour haptique comportant des vibreurs (tels que des vibreurs de type « voice coil » en anglais) dans lesquels un aimant coulisse à l'intérieur d'une bobine pour transmettre une vibration à une surface tactile du dispositif.

On connaît également d'autres dispositifs de commande, comportant un actionneur dans lequel un induit coulisse entre deux bobines. L'alimentation alternée des bobines permet d'attirer l'induit vers l'une ou l'autre des bobines, créant ainsi un effet oscillant vibratoire.

Ces dispositifs connus comportent des moyens de fixation permettant de fixer l'induit à une plaque de support du dispositif formant la surface tactile, de façon à transmettre un retour haptique à un utilisateur. L'induit est par exemple fixé à la plaque de support par vissage ou par encliquetage.

Toutefois, l'assemblage des moyens de fixation de l'induit avec ceux correspondants de la plaque de support peut occasionner des difficultés de montage, notamment lorsque la plaque de support doit être assemblée à une pluralité d'actionneurs.

En outre, il est important de s'assurer d'une bonne répartition des actionneurs dans le dispositif de manière à garantir un ressenti uniforme sur toute la plaque de support, ce qui peut s'avérer difficile étant donné les difficultés de montage liées à l'assemblage des moyens de fixation.

De plus, ces moyens de fixation peuvent engendrer des modifications des vibrations produites par les actionneurs, les moyens de fixation pouvant absorber une partie de l'énergie devant être transmise à la plaque de support et/ou modifier les fréquences du retour haptique généré.

Le but de la présente invention est donc de proposer un dispositif de commande à retour haptique robuste, facile à assembler et qui ne présente pas les inconvénients de l'état de la technique.

A cet effet, l'invention a pour objet un dispositif de commande à retour haptique comportant une plaque de support présentant un capteur de surface tactile pour transmettre un retour haptique à un utilisateur et au moins un actionneur relié à ladite plaque pour générer le retour haptique, ledit actionneur comportant une partie fixe et un induit mobile en translation dans un entrefer de la partie fixe entre une première et une deuxième position, **caractérisé en ce que** ladite plaque et ledit induit sont formés d'une seule pièce.

Suivant d'autres caractéristiques du dispositif de commande,
- ladite plaque est en matériau amagnétique, par exemple en aluminium,
- ladite plaque est en matière plastique et une partie de ladite plaque formant ledit induit, comporte un manchon métallique,
- ledit induit est formé par une extrémité d'un bras de ladite plaque comportant un coude, de sorte qu'un axe longitudinal dudit induit soit parallèle à un plan défini par ladite plaque,
- la base prend naissance à partir d'une dimension centrale de ladite plaque,
- la partie fixe comporte une première butée formée par un coude du bras de ladite plaque dans la première position et une deuxième butée formée par une rondelle de fixation, telle qu'un écrou, fixée à l'extrémité du bras de ladite plaque dans la deuxième position,
- la partie fixe comporte aux moins deux bobines électromagnétiques disposées autour d'un axe longitudinal dudit induit, lesdites bobines étant aptes à fournir un champ magnétique lorsqu'elles sont alimentées de sorte qu'en fonctionnement, le champ magnétique créé par lesdites bobines dirige ledit induit alternativement vers l'une ou l'autre desdites bobines,
- lesdites bobines sont fixées dans un logement annulaire d'une armature de la partie fixe et ledit induit possède une forme correspondante adaptée pour s'assembler avec l'armature de la partie fixe et lesdites bobines,
- l'induit est formé par un prolongement latéral de ladite plaque,
- l'induit est formé dans une face opposée à une surface tactile de ladite plaque,
- le dispositif comporte un châssis comprenant un moyen de maintien de ladite plaque au châssis, de manière à permettre le déplacement de ladite plaque selon l'axe longitudinal dudit induit,
- le moyen de maintien est formé par deux bordures opposées de ladite plaque comportant chacune un renflement s'engageant dans une glissière correspondante du châssis,
- la glissière est formée par deux lèvres élastiques,
- la partie fixe comporte en outre un coulisseau pour le coulissement dudit induit dans la partie fixe,
- le dispositif comporte au moins un amortisseur disposé entre ledit induit et la partie fixe.

D'autres avantages et caractéristiques apparaîtront à la lecture de la description de l'invention, ainsi que des dessins annexés sur lesquels :
- la figure 1a est une vue en perspective d'un dispositif de commande réalisé selon un premier mode de réalisation,
- la figure 1b est une vue de face d'un dispositif de commande analogue à celui de la figure 1a logé dans un châssis,
- la figure 1c est une vue en coupe B-B d'un actionneur du dispositif de commande de la figure 1b,
- les figures 2a et 2b sont des vues en perspectives d'une variante de réalisation du dispositif de commande de la figure 1a,
- la figure 2c est une vue de face des figures 2a et 2b,
- la figure 2d est une vue en coupe A-A du dispositif de commande de la figure 2c,
- les figures 3a et 3b sont des vues en perspective d'un dispositif de commande selon un deuxième mode de réalisation,
- la figure 3c est une vue de face du dispositif de commande de la figure 3a,
- la figure 3d est une vue en coupe A-A d'un actionneur du dispositif de commande de la figure 3c et,
- les figures 4a, 4b et 4c représentent des vues en coupe de variantes d'actionneurs du dispositif de commande de la figure 3a.

Sur ces figures, les éléments identiques portent les mêmes numéros de référence.

L'invention concerne un dispositif de commande à retour haptique, tel qu'un clavier ou un écran tactile, pouvant transmettre un retour haptique à un utilisateur ayant par exemple modifié ou sélectionné une commande.

Pour cela, le dispositif comporte au moins un actionneur pour générer un retour haptique et une plaque de support reliée à l'actionneur pour transmettre le retour haptique généré à un utilisateur.

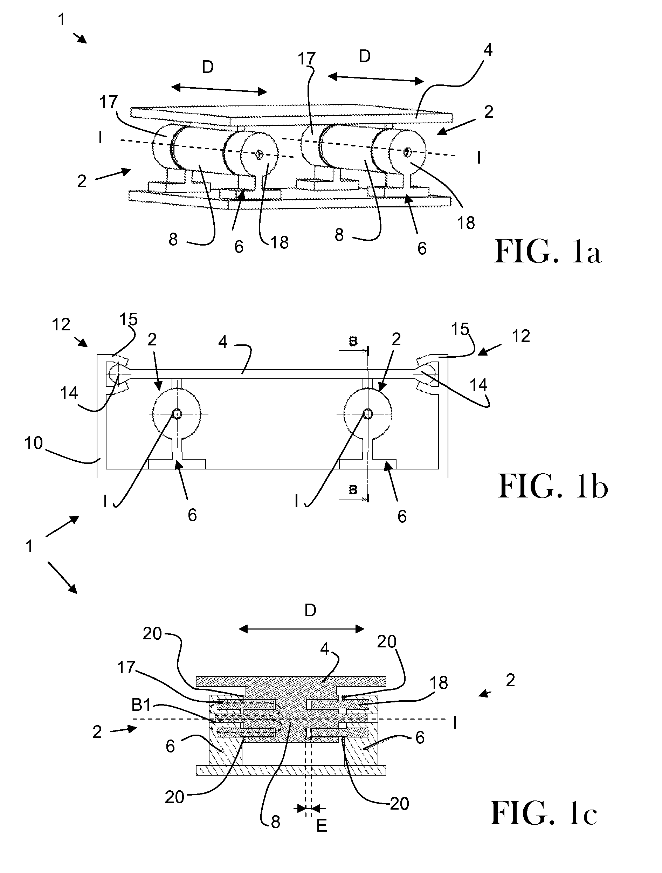

Le retour haptique est par exemple de type vibratoire. On distingue sur la figure 1a, un exemple de dispositif 1 selon l'invention comportant deux actionneurs 2 et une plaque de support 4.

La plaque de support 4 comporte un capteur de surface tactile («touchpad » en anglais) fixé sur ladite plaque 4 par exemple par collage et avantageusement recouverte par une peau de protection (non représenté).

Ces surfaces tactiles, de forme plane, permettent de détecter un appui simple du doigt et/ou un déplacement de cet appui sur la surface.

Le capteur de surface tactile utilise par exemple des résistances sensibles à la pression (également connu sous le nom de capteur FSR pour « Force Sensing Resistor » en anglais). Selon un exemple de réalisation, le capteur comporte une couche semi-conductrice prise en sandwich entre par exemple une couche conductrice et une couche résistive. En exerçant une pression sur la couche FSR, sa résistance ohmique diminue, permettant ainsi, par application d'une tension adaptée, de mesurer la pression appliquée et/ou la localisation de l'endroit où la pression est exercée. Selon une conception différente de la technologie FSR, le capteur tactile comprend deux feuilles souples de support espacées l'une de l'autre par des entretoises élastiques et portant sur des faces mutuellement en regard des éléments permettant de réaliser un contact électrique lors de la compression du capteur.

Chaque actionneur 2 comporte une partie fixe 6 et un induit mobile 8 en translation dans un entrefer E de la partie fixe 6 entre une première et une deuxième position, parallèlement à un axe longitudinal I de l'induit 8 (figure 1c).

A titre d'exemple, l'entrefer E est d'environ 0,5 millimètres.

Le dispositif 1 de commande comporte avantageusement un châssis 10 pour loger les actionneurs 2 et supporter la plaque de support 4 (figure 1b).

Le châssis 10 comprend avantageusement un moyen de maintien 12 de la plaque 4 au châssis 10, de manière à permettre le déplacement de la plaque 4 selon l'axe longitudinal I de l'induit 8.

Le moyen de maintien 12 est avantageusement formé dans des bordures parallèles à la direction de déplacement D de la plaque de support 4 (figure 1c).

De préférence, le moyen de maintien 12 est formé par deux bordures 14 opposées de la plaque 4 comportant chacune un renflement 14 s'engageant dans une glissière 15 correspondante du châssis 10, comme représenté sur la figure 1b.

Par exemple, la glissière 15 est formée par deux lèvres élastiques, pinçant le renflement 14 correspondant de la plaque 4.

Le moyen de maintien 12 permet au dispositif de commande 1 de résister à de fortes pressions exercées perpendiculairement à la surface de la plaque de support 4, tout en limitant le bruit résultant des mouvements de la plaque 4 relativement au châssis 10.

Il permet également de ne pas modifier le ressenti haptique transmis à l'utilisateur au cours du temps.

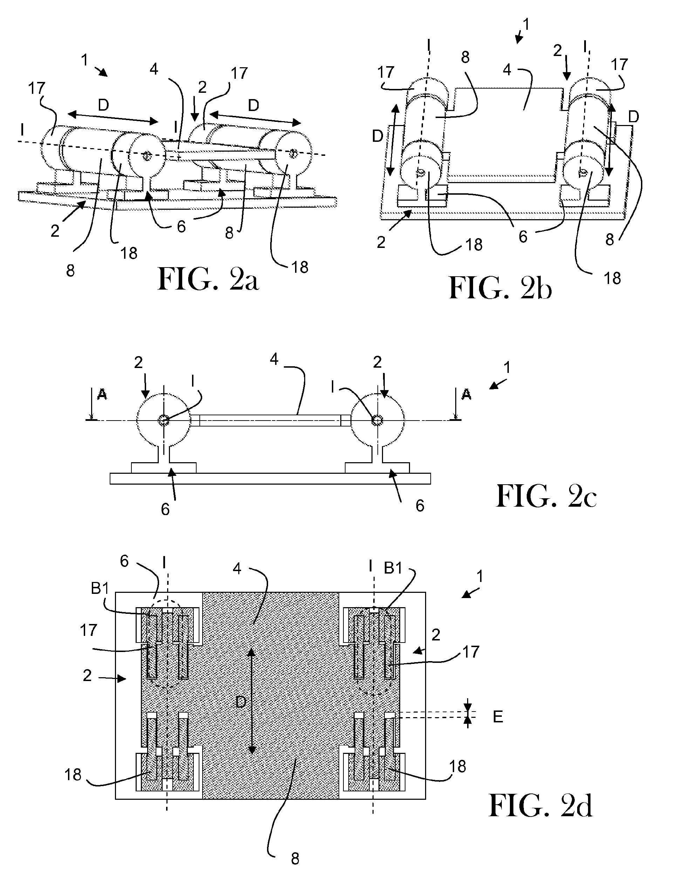

Selon un premier mode de réalisation représenté par les figures 1a, 1b, 1c, 2a, 2b, 2c et 2d, la partie fixe 6 de chaque actionneur 2 comporte deux bobines électromagnétiques 17, 18.

Comme visible sur les figures 1a, 1b et 1c, l'induit 8 est formé dans une face opposée à une surface tactile de la plaque 4.

Selon une variante de réalisation représentée sur les figures 2a, 2b, 2c et 2d, l'induit 8 est formé par un prolongement latéral de la plaque 4.

Les bobines 17, 18 sont disposées autour d'un axe longitudinal I de l'induit 8 et sont aptes à fournir un champ magnétique lorsqu'elles sont alimentées de sorte qu'en fonctionnement, le champ magnétique créé par les bobines 17, 18 dirige l'induit 8 alternativement vers l'une ou l'autre des bobines 17, 18.

De préférence, les bobines 17, 18 sont fixées dans un logement annulaire d'une armature de la partie fixe 6 et l'induit 8 possède une forme correspondante adaptée pour s'assembler avec l'armature de la partie fixe 6 et les bobines 17, 18, tout en laissant un interstice pour former l'entrefer E (figures 1c et 2d) de l'actionneur 2.

Ainsi, on forme un circuit magnétique entre la partie fixe 6 et l'induit 8 pour lequel les pertes magnétiques sont limitées.

Selon l'invention, la plaque 4 et l'induit 8 sont formés d'une seule pièce. Ainsi, l'agencement de la plaque et de l'actionneur permet d'une part, que le déplacement de l'induit 8 dans la partie fixe 6 fasse vibrer la plaque de support 4 et d'autre part, que l'induit 8 et donc la plaque 4, soient mécaniquement maintenus ensemble de façon robuste.

La plaque 4 est avantageusement en matériau amagnétique, par exemple en aluminium.

Alternativement, on prévoit une plaque de support 4 en matière plastique et on prévoit qu'une partie de la plaque 4 formant l'induit 8, comporte un manchon métallique (non représenté).

La plaque 4 et l'induit 8 peuvent alors facilement être obtenus par moulage et le glissement de l'induit 8 dans la partie fixe 6 est garanti par le manchon métallique.

De la sorte, les actionneurs 2 n'ont pas besoin d'être parfaitement alignés avec la plaque 4 pour pouvoir être assemblés à celle-ci, ce qui facilite et réduit les temps d'assemblage.

De plus, la répartition des actionneurs 2 sur la plaque de support 4 est facilitée, ce qui permet d'optimiser la disposition des actionneurs 2 permettant d'obtenir un ressenti uniforme par l'utilisateur sur toute la plaque de support 4.

En outre, les pertes d'énergie sont limitées car les fréquences et amplitudes de vibrations ne sont pas déformées ou amoindries par des pièces intermédiaires ou par d'éventuels relâchements des moyens de fixation.

En outre on prévoit au moins un amortisseur 20 entre l'induit 8 et la partie fixe 6. On dispose ainsi de préférence un amortisseur 20 dans chaque entrefer E situé entre l'induit 8 et la partie fixe 6. Ainsi, l'actionneur 2 possède deux amortisseurs 20, chacun présentant par exemple une forme de couronne, comme on peut le distinguer sur la figure 1c.

Les amortisseurs 20, de préférence en silicone ou en élastomère, permettent d'amortir d'éventuels contacts entre l'induit 8 et la partie fixe 6 au niveau de l'entrefer E, notamment au démarrage de l'actionneur 2, limitant ainsi d'éventuels bruits résultants de ce contact.

Ainsi en fonctionnement, les bobines 17, 18 sont alternativement alimentées de sorte qu'au cours d'une première période, un premier champ magnétique B1 attire l'induit 8 vers la première bobine 17 dans une première position (figures 1c et 2d).

Les premières lignes de champ magnétique B1 vont préférentiellement boucler dans la partie de l'induit 8 sur lequel est montée la première bobine 17 et dans la partie fixe 6.

Puis, au cours d'une deuxième période non représentée, un deuxième champ magnétique attire l'induit 8 vers la deuxième bobine 18, dans une deuxième direction opposée à la première direction.

Dans cette deuxième position, les deuxièmes lignes de champ magnétique vont préférentiellement boucler dans la partie de l'induit 8 sur lequel est montée la deuxième bobine 18 et dans la partie fixe 6.

L'induit 8, et donc la plaque de support 4, se déplacent alors alternativement dans les deux directions opposées, créant ainsi un effet haptique de type vibratoire au niveau de la plaque 4 selon la flèche D, parallèlement à l'axe longitudinal I de l'induit 8 (figures 1c et 2d).

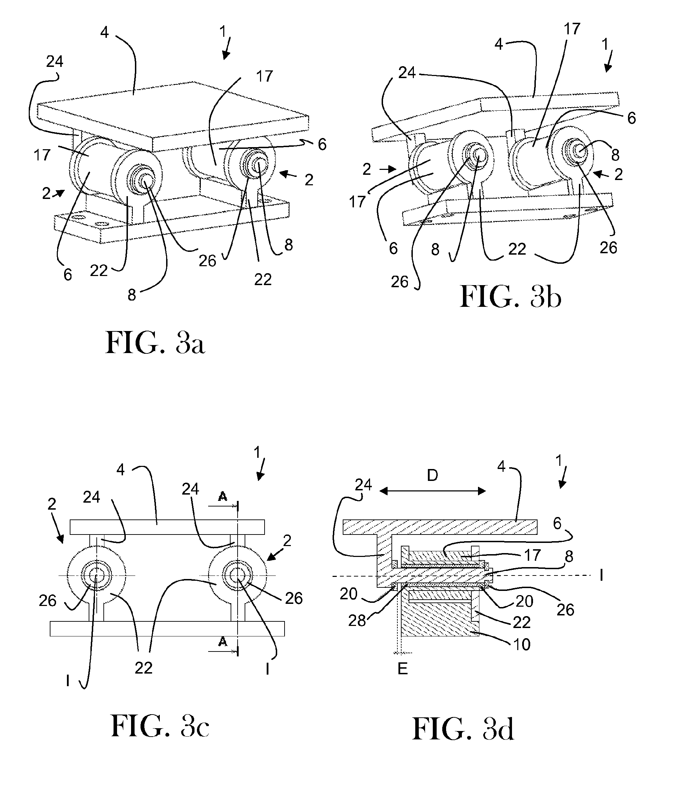

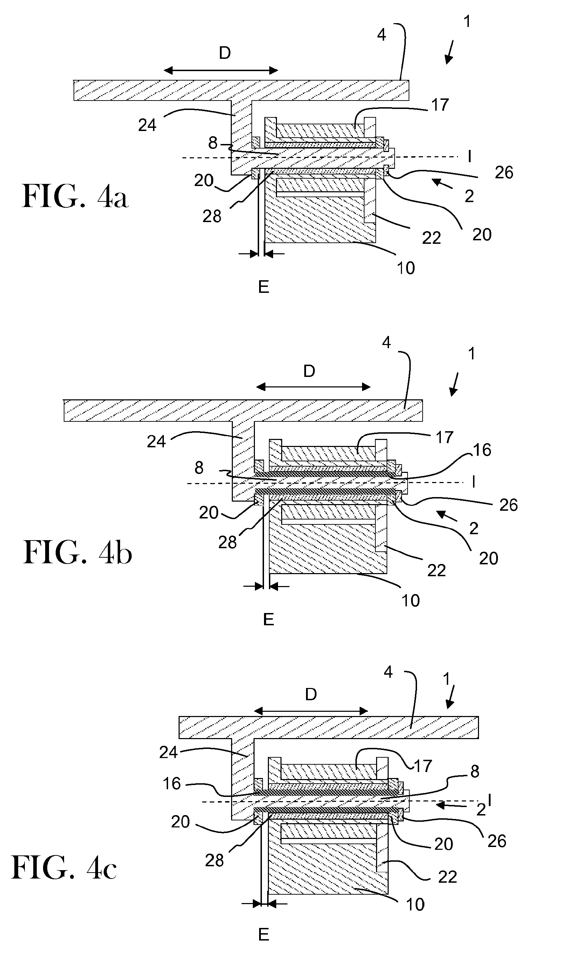

Selon un deuxième mode de réalisation représenté sur les figures 3a, 3b, 3c, 3d, 4a, 4b et 4c, le dispositif 1 comporte au moins un actionneur 2 ayant une bobine électromagnétique 17 disposée autour de l'induit 8.

Comme on peut le voir sur la figure 3d, la partie fixe 6 est maintenue au châssis 10 par une rondelle de liaison 22 comportant une patte de fixation.

L'induit 8 est avantageusement formé par une extrémité d'un bras 24 de la plaque 4.

Le bras 24 possède une base prenant naissance dans une face de la plaque 4 opposée à une surface tactile de la plaque 4 ou peut être formé par un prolongement latéral de la plaque 4. Le bras 24 comporte un coude, de sorte qu'un axe longitudinal I de l'induit 8 soit parallèle à un plan défini par la plaque 4.

De préférence, une base du bras 24 prend naissance à partir d'une dimension centrale de la plaque de support 1, au milieu d'un axe latéral de la plaque 4 (figures 4a et 4b).

Avantageusement, et comme représenté sur les figures 3a, 3b, 3c, 3d, 4a, 4b et 4c, la partie fixe 6 comporte une première butée formée par un coude du bras 24 dans une première position et une deuxième butée 26 formée par une rondelle de fixation, telle qu'un écrou, fixée à l'extrémité du bras 24 de la plaque 4 dans une deuxième position.

La plaque 4 est de préférence métallique ou en matière plastique avec un manchon métallique 16 entourant l'induit 8, comme mieux visible sur la figure 4b et 4c.

En outre, la partie fixe 6 comporte de préférence un coulisseau 28 pour améliorer encore le coulissement de l'induit 8 dans la partie fixe 6.

Ainsi, la bobine 17 est alternativement alimentée de sorte qu'au cours d'une première période, l'induit 8 est attiré vers la première butée formée par le coude du bras 24. Les lignes de champ magnétique crées vont préférentiellement boucler dans la partie de l'induit 8 en regard de la première butée.

Puis, au cours d'une deuxième période, l'induit 8 est attiré vers la deuxième butée 26 de la partie fixe 6 dans une deuxième direction opposée à la première direction. Les lignes de champ magnétique crées vont préférentiellement boucler dans la partie de l'induit 8 en regard de la deuxième butée 26.

L'induit 8, et donc la plaque de support 4, se déplacent alors alternativement dans les deux directions, créant ainsi un effet haptique de type vibratoire au niveau de la plaque 4 selon la flèche D, parallèlement à l'axe longitudinal I de l'induit 8 (figure 3d, 4a, 4b et 4c).

Un tel dispositif de commande 1 permet donc de fournir un effet haptique à un utilisateur en faisant osciller l'induit 8 dans la partie fixe 6, sans perte de rendement, avec un dispositif de commande 1 simple à réaliser et à assembler.

## Revendications

1. Dispositif de commande à retour haptique comportant une plaque de support (4) présentant un capteur de surface tactile, pour transmettre un retour haptique à un utilisateur et au moins un actionneur (2) relié à ladite plaque (4) pour générer le retour haptique, ledit actionneur (2) comportant une partie fixe (6) et un induit mobile (8) en translation dans un entrefer (E) de la partie fixe (6) entre une première et une deuxième position, **caractérisé en ce que** ladite plaque (4) et ledit induit (8) sont formés d'une seule pièce.

2. Dispositif de commande selon la revendication 1, **caractérisé en ce que** ladite plaque (4) est en matériau amagnétique, par exemple en aluminium.

3. Dispositif de commande selon la revendication 1, **caractérisé en ce que** ladite plaque (4) est en matière plastique et **en ce qu'**une partie de ladite plaque (4) formant ledit induit (8), comporte un manchon métallique (16).

4. Dispositif de commande selon l'une quelconque des revendications précédentes, **caractérisé en ce que** ledit induit (8) est formé par une extrémité d'un bras (24) de ladite plaque (4) comportant un coude, de sorte qu'un axe longitudinal (I) dudit induit (8) soit parallèle à un plan défini par ladite plaque (4).

5. Dispositif de commande selon la revendication 4, **caractérisé en ce que** la base prend naissance à partir d'une dimension centrale de ladite plaque (4).

6. Dispositif de commande selon l'une quelconque des revendications 4 ou 5,
**caractérisé en ce que** la partie fixe (6) comporte une première butée formée par un coude du bras (24) de ladite plaque (4) dans la première position et une deuxième butée (26) formée par une rondelle de fixation, telle qu'un écrou, fixée à l'extrémité du bras (24) de ladite plaque (4) dans la deuxième position.

7. Dispositif de commande selon l'une quelconque des revendications 1 à 3,
**caractérisé en ce que** la partie fixe (6) comporte aux moins deux bobines électromagnétiques (17, 18) disposées autour d'un axe longitudinal (I) dudit induit (8), lesdites bobines (17, 18) étant aptes à fournir un champ magnétique lorsqu'elles sont alimentées de sorte qu'en fonctionnement, le champ magnétique créé par lesdites bobines (17, 18) dirige ledit induit (8) alternativement vers l'une ou l'autre desdites bobines (17, 18).

8. Dispositif de commande selon la revendication 7, **caractérisé en ce que** lesdites bobines (17, 18) sont fixées dans un logement annulaire d'une armature de la partie fixe (6) et **en ce que** ledit induit (8) possède une forme correspondante adaptée pour s'assembler avec l'armature de la partie fixe (6) et lesdites bobines (17, 18).

9. Dispositif de commande selon l'une quelconque des revendications précédentes, **caractérisé en ce que** l'induit (8) est formé par un prolongement latéral de ladite plaque (4).

10. Dispositif de commande selon l'une quelconque des revendications 1 à 8,
**caractérisé en ce que** l'induit (8) est formé dans une face opposée à une surface tactile de ladite plaque (4).

11. Dispositif de commande selon l'une quelconque des revendications précédentes, **caractérisé en ce qu'**il comporte un châssis (10) comprenant un moyen de maintien (12) de ladite plaque (4) au châssis (10), de manière à permettre le déplacement (D) de ladite plaque (4) selon l'axe longitudinal (I) dudit induit (8).

12. Dispositif de commande selon la revendication 11, **caractérisé en ce que** le moyen de maintien (12) est formé par deux bordures (14) opposées de ladite plaque (4) comportant chacune un renflement (14) s'engageant dans une glissière (15) correspondante du châssis (10).

13. Dispositif de commande selon la revendication 12, **caractérisé en ce que** la glissière (15) est formée par deux lèvres élastiques.

14. Dispositif de commande selon l'une quelconque des revendications précédentes, **caractérisé en ce que** la partie fixe (6) comporte en outre un coulisseau (28) pour le coulissement dudit induit (8) dans la partie fixe (6).

15. Dispositif de commande selon l'une quelconque des revendications précédentes, **caractérisé en ce qu'**il comporte au moins un amortisseur (20) disposé entre ledit induit (8) et la partie fixe (6).
